# EUROPÄISCHE PATENTSCHRIFT

(11) **EP 2 897 078 B1**
(45) Veröffentlichungstag und Bekanntmachung des Hinweises auf die Patenterteilung: **10.01.2018**
(21) Anmeldenummer: 14151941.3
(22) Anmeldetag: 21.01.2014
(51) Int. Cl.: G06F 21/36, G06Q 20/32, G07F 7/10, G06F 21/42, G07F 19/00, G09B 21/00

(54) **Authentifizierung über eine zufällig angeordenete Tastatur, die über einen sekundären visuellen Kanal vom Benutzergerät aufgenommen wird**
Authentication via a scrambled keypad which is captured by user device over secondary visual channel
Authentification via un clavier randomisé qui est capté par le dispositif de l'utilisateur sur un canal visuel secondaire

(43) Veröffentlichungstag der Anmeldung: 22.07.2015
(73) Patentinhaber: Wincor Nixdorf International GmbH, 33106 Paderborn (DE)
(72) Erfinder: Urban, Patrick, 33102 Paderborn (DE); Knobloch, Alexander, 33100 Paderborn (DE)

(56) Entgegenhaltungen:
- WO-A1-2010/131218
- US-A1- 2002 188 872
- US-A1- 2012 160 912
- US-A1- 2013 159 196

## Beschreibung

Die Erfindung betrifft ein System zur sicheren Eingabe einer Sicherheitskennung nach dem Oberbegriff des Anspruchs 1 sowie ein Verfahren zur sicheren Eingabe einer Sicherheitskennung.

Ein derartiges System umfasst ein erstes Terminal zur Vornahme einer Geldtransaktion, das eine visuelle Ausgabeeinrichtung aufweist und ausgebildet ist, über die Ausgabeeinrichtung eine Kennzeichenfolge, insbesondere eine Ziffernfolge bestehend aus Zahlen und/oder eine Zeichenfolge bestehend aus Buchstaben und /oder Zahlen, mit einer vorbestimmten Anzahl von Ziffern visuell auszugeben. Das System umfasst weiter ein zweites Terminal, insbesondere ein mobiles Endgerät, das eine Steuereinrichtung, eine Eingabeeinrichtung und eine Aufnahmeeinrichtung aufweist. Die Eingabeeinrichtung weist hierbei eine Tastenanordnung mit einer vorbestimmten Anzahl von Tasten auf, über die ein Nutzer eine Sicherheitskennung in das zweite Terminal eingeben kann. Ein Server steht mit dem ersten Terminal und dem zweiten Terminal in Kommunikationsverbindung und steuert das Zusammenwirken zwischen dem feststehenden Terminal und dem zweiten Terminal zur sicheren Eingabe der Sicherheitskennung.

Ein solches erstes Terminal kann als feststehendes Terminal ausgebildet sein, auch als Selbstbedienungsterminal bezeichnet, und kann beispielsweise als Geldautomat dienen, der in einer Bank, einem Einkaufszentrum oder an einem sonstigen Ort aufgestellt sein kann und es einem Nutzer ermöglicht, durch Verwenden seiner Bankkarte Geld von seinem Konto abzuheben und sich bar auszahlen zu lassen. Andere Terminals ermöglichen die Vornahme einer Banktransaktion, beispielsweise einer Überweisung von einem Konto auf ein anderes Konto, oder einer Bezahltransaktion, beispielsweise wenn das Terminal einen Fahrkartenautomaten oder ein anderes Serviceterminal verwirklicht, an dem für eine Leistung ein Geldbetrag zu entrichten ist.

Um an einem solchen Terminal eine Transaktion vornehmen zu können, ist üblicherweise erforderlich, dass ein Nutzer sich durch Eingabe einer Sicherheitskennung, der sogenannten PIN ("Personal Identification Number"), authentifiziert. Die Sicherheitskennung ist beispielsweise einer Bankkarte zugeordnet und besteht aus einer vorbestimmten Anzahl von Ziffern, beispielsweise vier Ziffern. Erst nach korrekter Eingabe der Sicherheitskennung kann ein Nutzer über seine Bankkarte eine gewünschte Transaktion durchführen.

Heutzutage verfügen Geldautomaten üblicherweise über ein Tastenfeld, das sogenannte EPP (Encrypting Pin Pad), das ausgebildet ist, eine eingegebene Sicherheitskennung zu verschlüsseln und an angeschlossene Einheiten, insbesondere einen zentralen Server, zu übertragen, der dann die Authentifizierung durchführt.

Die Verwendung von EPPs ermöglicht eine sichere Eingabe einer Sicherheitskennung. Solche EPPs haben dabei jedoch den Nachteil, dass sie als dedizierte Hardwarekomponenten vergleichsweise teuer sind. Es besteht daher ein Bedürfnis nach Lösungen, die ohne den Einsatz von solchen EPPs und somit auf kostengünstige Weise eine sichere Eingabe einer Sicherheitskennung zur Authentifizierung an einem Terminal ermöglichen.

Aus der US 2012/0218188 A1 ist ein Informationsverarbeitungsapparat bekannt, der einen Server, eine Ausgabeeinheit und eine Eingabeeinheit umfasst. Der Server definiert hierbei eine virtuelle Tastenbelegung und dient dazu, erhaltene Eingabedaten zu verifizieren. Die Ausgabeeinheit kennt die virtuelle Tastenbelegung und wirkt mit einer Überlagerungseinheit zusammen. Die Überlagerungseinheit visualisiert dem Nutzer die vom Server vorgegebene Tastenbelegung an einer Eingabefläche der Eingabeeinheit.

Aus der JP 61150065 A ist ein Geldautomat bekannt, der über eine sogenannte Braille-Zeile neben jeder Transaktionstaste verfügt, um einem sehbehinderten Benutzer die Bedeutung der Taste taktil mitzuteilen.

Aus der CN 101593388 A ist ein Geldautomat bekannt, der über eine Passworteingabetastatur verfügt, die mit einem Kopfhörer verbunden ist, um sehbehinderte Menschen bei der Passworteingabe zu unterstützen.

Die US 2013/159196 A1 bezieht sich auf ein System und ein Verfahren, bei dem auf einem ersten Terminal, dem sogenannten "Merchant Terminal" über ein "Merchant Display" eine Ansicht ausgegeben wird. Diese Ansicht enthält ein "Random Keypad" und ein Symbol ("First Token"), das beispielsweise anhand einer Kennung und einer Bezahl-Quittung erstellt worden ist. Eine PIN-Eingabe soll über ein mobiles Endgerät erfolgen. Hierzu wird die Ansicht des Displays des ersten Terminals über eine Kamera des mobilen Endgeräts aufgenommen und auf dem Bildschirm des mobilen Endgeräts angezeigt. Über die auf dem Bildschirm des mobilen Endgeräts angezeigte Tastenanordnung kann ein Nutzer nunmehr eine PIN eingeben, wobei das mobile Endgerät die vom Nutzer berührten Positionen ermittelt und an einen Payment-Server übersendet. Der Server rekonstruiert anhand der übersandten Positionen die eingegebene PIN und vergleicht diese mit einer vorab gespeicherten PIN, um auf diese Weise den Nutzer zu autorisieren. Um einem Nutzer die Eingabe zu erleichtern, kann hierbei mittels "Augmented Reality" die Tastenanordnung auf dem Bildschirm des mobilen Endgeräts grafisch überlagert werden.

Die US 2002/188872 A1 beschreibt ein System, bei dem für eine sichere PIN-Eingabe wiederholt ein zufallsabhängiges Keypad erstellt wird.

Aufgabe der vorliegenden Erfindung ist es, ein System sowie ein Verfahren zur sicheren Eingabe einer Sicherheitskennung zur Verfügung zu stellen, die auf kostengünstige Weise eine mindestens genauso sichere Eingabe einer Sicherheitskennung ermöglichen.

Diese Aufgabe wird gelöst durch ein System zur sicheren Eingabe einer Sicherheitskennung mit den Merkmalen des Anspruchs 1.

Demnach ist bei einem solchen System vorgesehen, dass
- die Aufnahmeeinrichtung des zweiten Terminals ausgebildet ist, die über die Ausgabeeinrichtung des ersten Terminals ausgegebene Kennzeichenfolge visuell aufzunehmen,
- die Steuereinrichtung des zweiten Terminals ausgebildet ist, die aufgenommene Kennzeichenfolge derart der Tastenanordnung der Eingabeeinrichtung zuzuordnen, dass jede Ziffer der Kennzeichenfolge einer Taste der Tastenanordnung zugeordnet ist,
- das zweites Terminal ausgebildet ist, eine über die Tastenanordnung der Eingabeeinrichtung anhand der Ziffern der Kennzeichenfolge eingegebene Eingabefolge an einen Server zu übertragen, und
- der Server ausgebildet ist, die Eingabefolge anhand der Kennzeichenfolge in eine eingegebene Sicherheitskennung zu übersetzen und die eingegebene Sicherheitskennung gegen eine vorbekannte Sicherheitskennung zu verifizieren.

Die vorliegende Erfindung geht von dem Gedanken aus, bei einem System zur sicheren Eingabe einer Sicherheitskennung die Eingabe durch Zusammenwirken eines ersten Terminals, beispielsweise eines feststehenden, stationären Terminals in Form eines Selbstbedienungsterminals, mit einem zweiten Terminal, beispielsweise einem mobilen Endgerät, erfolgen zu lassen. Die Ausgabeeinrichtung des ersten Terminals, beispielsweise ein Bildschirm, stellt hierbei eine Kennzeichenfolge in Folge einer Permutation der Ziffern 0 bis 9 visuell dar. Diese Kennzeichenfolge wird von einer

Aufnahmeeinrichtung des zweiten Terminals, beispielsweise einer Kameraeinrichtung, visuell aufgenommen und derart der Tastenanordnung der Eingabeanordnung zugeordnet, dass jede Ziffer der Kennzeichenfolge einer Taste der Tastenanordnung zugeordnet ist. Ein Nutzer kann nun über die Tasten der Tastenanordnung, die für ihn sichtbar den Ziffern der Kennzeichenfolge zugeordnet sind, die Sicherheitskennung eingeben, wobei das zweites Terminal eine so eingegebene Eingabefolge an den Server überträgt, der diese Eingabefolge anhand der ihm bekannten Kennzeichenfolge in eine eingegebene Sicherheitskennung übersetzt und die eingegebene Sicherheitskennung gegen eine vorbekannte Sicherheitskennung verifiziert.

Ein besonderes Merkmal besteht hierbei darin, dass das erste Terminal die Kennzeichenfolge in Form der Permutation der Ziffern 0 bis 9 kennt, nicht aber Informationen über die eingegebene Sicherheitskennung erhält. Das zweites Terminal wiederum kennt die Kennzeichenfolge nicht, sondern erfährt bloß, welche Tasten ein Benutzer betätigt. Die Zuordnung der über die Aufnahmeeinrichtung visuell aufgenommenen Kennzeichenfolge zu der Tastenanordnung auf dem zweiten Terminal erfolgt hierbei rein visuell, ohne dass das zweites Terminal eine Erkennung der Kennzeichenfolge durchführt. Das zweites Terminal teilt dem Server mit, welche Tasten ein Nutzer betätigt hat (dies ist die Eingangsfolge), und erst der Server kann anhand der ihm bekannten Kennzeichenfolge und der übermittelten Eingabefolge eine Verifikation der Sicherheitskennung durchführen, indem er die Eingabefolge anhand der Kennzeichenfolge in eine eingegebene Sicherheitskennung übersetzt und gegen eine vorbekannte Sicherheitskennung verifiziert.

Die Kennzeichenfolge entspricht nicht notwendigerweise einer Ziffernfolge, sondern kann auch durch eine Zeichenfolge bestehend aus Buchstaben und oder Zahlen ausgebildet sein. In letzterem Fall kann die ausgegebene Kennzeichenfolge beispielsweise eine Permutation der Buchstaben des Alphabets enthalten.

Dadurch, dass die Eingabe der Sicherheitskennung nicht über eine Tastatur des ersten Terminals erfolgt, kann an dem Terminal auf ein EPP, also auf eine dedizierte, in besonderer Weise gesicherte Eingabeeinrichtung, verzichtet werden, was das Terminal kostengünstiger macht. Weiter ist ein Ausspionieren einer Eingabe einer Sicherheitskennung (das sogenannte "Skimming") erheblich erschwert, da anhand der vom Terminal ausgegebenen Kennzeichenfolge keinerlei Rückschlüsse auf eine eingegebene Sicherheitskennung gezogen werden können. Ein gleichzeitiges Überwachen eines mobilen Endgerätes ist mit einer an einem Terminal in betrügerischer Absicht installierten Überwachungseinrichtung schwierig, wenn nicht gar unmöglich. Schließlich ergibt sich als weiterer Vorteil, dass ein Verlust des mobilen Endgerätes kein Risiko dahingehend darstellt, dass damit auch Informationen über die Sicherheitskennung des Inhabers des zweiten Terminals bekannt würden, da dem mobilen Endgerät die Sicherheitskennung nicht bekannt ist und auch zu keinem Zeitpunkt bei der Eingabe bekannt wird, was - beispielsweise im Unterschied zu heutzutage bekannten mobilen Bank-Applikationen - einen erheblichen Sicherheitsvorteil mit sich bringt.

Die Steuereinrichtung ist vorzugsweise ausgebildet, die Ziffern der Kennzeichenfolge den Tasten der Tastenanordnung anhand der Anordnung der Ziffern zuzuordnen. Stellt die Kennzeichenfolge eine Permutation der Ziffern 0 bis 9 dar, so werden die Ziffern anhand ihrer Anordnung in der Kennzeichenfolge den Tasten der Tastenanordnung zugeordnet. Lautet die Kennzeichenfolge beispielsweise "3 1 2 4 7 8 5 6 9", so wird der ersten Taste die erste Ziffer "3", der zweiten Taste die zweite Ziffer "1", der dritten Taste die dritte Ziffer "2" usw. zugeordnet. Die vom zweiten Terminal an den Server übertragene Eingabefolge enthält hierbei lediglich Informationen darüber, welche Tasten ein Nutzer betätigt hat. Betätigt ein Nutzer beispielsweise die erste, dritte, fünfte und siebente Taste, so wird ausschließlich diese Information an den Server übermittelt, nicht aber Informationen über eine etwaige Zuordnung von Ziffern zu den Tasten.

Die Eingabeeinrichtung des zweiten Terminals ist vorzugsweise durch einen berührungssensitiven Bildschirm ausgebildet, auf dem die Tastenanordnung mit ihren Tasten angezeigt wird. Die Aufnahmeeinrichtung des zweiten Terminals ist beispielsweise durch eine Kameraeinrichtung ausgebildet und dient dazu, visuell die vom ersten Terminal ausgegebene Kennzeichenfolge aufzunehmen und auf dem (berührungssensitiven) Bildschirm des zweiten Terminals darzustellen. Die Darstellung erfolgt hierbei derart, dass die auf dem berührungssensitiven Bildschirm dargestellte Tastenanordnung mit der über die Aufnahmeeinrichtung aufgenommenen Kennzeichenfolge überlagert wird, so dass eine räumliche Zuordnung der aufgenommenen Kennzeichenfolge zu der dargestellten Tastenanordnung erfolgt, ohne dass das zweites Terminal Kenntnis darüber erlangt, welche Ziffer der Kennzeichenfolge welcher Taste der Tastenanordnung dem Wert nach zugeordnet ist (wenn die erste Taste der Tastenanordnung überlagert mit der ersten Ziffer der Kennzeichenfolge, beispielsweise der "3, dargestellt wird, so weiß das zweites Terminal nicht, welche Ziffer dem Wert nach dieser ersten Taste zugeordnet ist). Durch die überlagerte grafische Darstellung der Tastenanordnung mit der aufgenommenen Kennzeichenfolge an der Eingabeeinrichtung erhält ein Nutzer zwar Kenntnis darüber, welche Taste er zur Eingabe welcher Ziffer zu betätigen hat, ohne dass das zweites Terminal dabei aber weiß, welcher Taste welche Ziffer dem Wert nach zugeordnet ist.

Die Aufnahme der Kennzeichenfolge und die Zuordnung der Ziffern der Kennzeichenfolge zu den Tasten der Tastenanordnung erfolgt somit rein visuell durch überlagerte Darstellung an der Eingabeeinrichtung des zweiten Terminals. Um hierbei, insbesondere bei Ausgestaltung der Eingabeeinrichtung des zweiten Terminals als berührungssensitiver Bildschirm, einem Nutzer eine korrekte Aufnahme der Kennzeichenfolge zur überlagerten Darstellung mit der Tastenanordnung zu erleichtern, ist die Steuereinrichtung des zweiten Terminals vorzugsweise ausgebildet, ein Hinweissignal zu erzeugen, das einem Nutzer anzeigt, wenn er über die Aufnahmeeinrichtung die Kennzeichenfolge so aufnimmt oder aufgenommen hat, dass sie in überlagerter Weise mit der Tastenanordnung dargestellt werden kann. Durch ein geeignetes Hinweissignal kann dem Nutzer so beispielsweise mitgeteilt werden, wie er die Aufnahmeeinrichtung des zweiten Terminals zur Ausgabeeinrichtung des ersten Terminals auszurichten hat, um eine korrekte Aufnahme zu erreichen. Ein solches Hinweissignal kann beispielsweise in Form eines an der Eingabeeinrichtung dargestellten Rahmens, der beispielsweise von rot auf grün umschaltet, sobald sich die aufgenommene Kennzeichenfolge in korrekter Position innerhalb des Rahmens befindet, ausgegeben werden. Denkbar ist auch, einem Nutzer, über ein akustisches Hinweissignal Anweisungen für die korrekte Ausrichtung der Aufnahmeeinrichtung zur Ausgabeeinrichtung des ersten Terminals zu geben, indem beispielsweise bei korrekt überlagerter Darstellung der Kennzeichenfolge mit der Tastenanordnung ein akustisches Hinweissignal ausgegeben wird.

Die Aufgabe wird auch gelöst durch ein Verfahren zur sicheren Eingabe einer Sicherheitskennung, bei dem ein erstes, insbesondere feststehendes Terminal zur Vornahme einer Geldtransaktion über eine Ausgabeeinrichtung eine Kennzeichenfolge mit einer vorbestimmten Anzahl von Ziffern visuell ausgibt, ein zweites Terminal, insbesondere ein mobiles Endgerät, eine Steuereinrichtung, eine Eingabeeinrichtung und eine Aufnahmeeinrichtung aufweist, wobei die Eingabeeinrichtung eine Tastenanordnung mit einer vorbestimmten Anzahl von Tasten aufweist, und ein Server mit dem ersten Terminal und dem zweiten Terminal in Kommunikationsverbindung steht. Dabei ist vorgesehen, dass
- die Aufnahmeeinrichtung des zweiten Terminals die über die Ausgabeeinrichtung des ersten Terminals ausgegebene Kennzeichenfolge visuell aufnimmt,
- die Steuereinrichtung des zweiten Terminals die aufgenommene Kennzeichenfolge derart der Tastenanordnung der Eingabeeinrichtung zuordnet, dass jede Ziffer der Kennzeichenfolge einer Taste der Tastenanordnung zugeordnet ist,
- das zweites Terminal eine über die Tastenanordnung der Eingabeeinrichtung anhand der Ziffern der Kennzeichenfolge eingegebene Eingabefolge an den Server überträgt, und
- der Server die Eingabefolge anhand der Kennzeichenfolge in eine eingegebene Sicherheitskennung übersetzt und die eingegebene Sicherheitskennung gegen eine vorbekannte Sicherheitskennung verifiziert.

Die vorangehend für das System beschriebenen Vorteile und vorteilhaften Ausgestaltungen finden analog auch auf das Verfahren Anwendung, so dass auf das vorangehend Ausgeführte verwiesen werden soll.

Insbesondere kann bei dem Verfahren vorgesehen sein, dass der Server eine Kennzeichenfolge in Form einer Permutation der Ziffern 0 bis 9 zum Ausgeben über die Ausgabeeinrichtung an das erste Terminal überträgt. Der Server erzeugt somit eine Kennzeichenfolge in Form einer Permutation der Ziffern 0 bis 9 und überträgt diese an das erste Terminal. Das erste Terminal gibt die Kennzeichenfolge über die Ausgabeeinrichtung aus, so dass die Kennzeichenfolge über die Aufnahmeeinrichtung des zweiten Terminals aufgenommen werden kann.

Grundsätzlich ist hierbei ausreichend, wenn der Server für die Eingabe einer Sicherheitskennung einmal eine Kennzeichenfolge in Form einer Permutation der Ziffern 0 bis 9 erzeugt und an das erste Terminal überträgt, damit das erste Terminal diese Kennzeichenfolge über die Ausgabeeinrichtung ausgeben kann. Anhand dieser einen Kennzeichenfolge kann der Nutzer dann über das zweite Terminal, z.B. sein mobiles Endgerät, die Sicherheitskennung eingeben, wobei das zweites Terminal Informationen über die am zweiten Terminal betätigten Tasten in Form der Eingabefolge an den Server überträgt und der Server diese Eingabefolge anhand der ihm bekannten Kennzeichenfolge in eine eingegebene Sicherheitskennung übersetzt, die sodann mit der dem Server bekannten Sicherheitskennung verglichen und somit verifiziert werden kann.

Um hierbei die Sicherheit für die Eingabe einer Sicherheitskennung weiter zu erhöhen, kann jedoch auch vorgesehen sein, dass der Server nach jeder Betätigung einer Taste der Tastenanordnung der Eingabeeinrichtung des zweiten Terminals durch einen Nutzer eine neue Kennzeichenfolge in Form einer anderen Permutation der Ziffern 0 bis 9 generiert und an das erste Terminal überträgt, so dass nach jeder Tastenbetätigung das erste Terminal eine neue Kennzeichenfolge anzeigt, die über die Aufnahmeeinrichtung des zweiten Terminals zur überlagerten Darstellung mit der Tastenanordnung aufgenommen wird. Die Eingabe jeder Ziffer der Sicherheitskennung erfolgt somit anhand einer anderen Kennzeichenfolge.

Die Aufgabe wird auch gelöst durch ein System zur sicheren Eingabe einer Sicherheitskennung mit einem ersten, insbesondere feststehenden Terminal zur Vornahme einer Geldtransaktion, einem zweiten Terminal, insbesondere mobilen Endgerät, und einem Server, der mit dem erstes Terminal und dem zweiten Terminal in Kommunikationsverbindung steht. Dabei ist vorgesehen, dass
- eins von dem ersten Terminal und dem zweiten Terminal eine taktile oder akustische Ausgabeeinrichtung aufweist, die ausgebildet ist, eine Kennzeichenfolge mit einer vorbestimmten Anzahl von Ziffern taktil oder akustisch auszugeben,
- das andere von dem ersten Terminal und dem zweiten Terminal eine Eingabeeinrichtung aufweist, die eine Tastenanordnung mit einer vorbestimmten Anzahl von Tasten aufweist und ausgebildet ist, eine über die Tastenanordnung der Eingabeeinrichtung durch einen Nutzer anhand der Ziffern der Kennzeichenfolge eingegebene Eingabefolge an den Server zu übertragen, und
- der Server ausgebildet ist, die Eingabefolge anhand der Kennzeichenfolge in eine eingegebene Sicherheitskennung zu übersetzen und die eingegebene Sicherheitskennung gegen eine vorbekannte Sicherheitskennung zu verifizieren.

Bei einem Verfahren zur sicheren Eingabe einer Sicherheitskennung werden ein erstes, insbesondere feststehendes Terminal zur Vornahme einer Geldtransaktion, ein zweites Terminal, insbesondere ein mobiles Endgerät, und ein Server, der mit dem ersten Terminal und dem zweiten Terminal in Kommunikationsverbindung steht, verwendet. Dabei ist vorgesehen, dass
- eins von dem ersten Terminal und dem zweiten Terminal eine taktile oder akustische Ausgabeeinrichtung aufweist, die eine Kennzeichenfolge mit einer vorbestimmten Anzahl von Ziffern taktil oder akustisch ausgibt,
- das andere von dem ersten Terminal und dem zweiten Terminal eine Eingabeeinrichtung aufweist, die eine Tastenanordnung mit einer vorbestimmten Anzahl von Tasten aufweist und eine über die Tastenanordnung der Eingabeeinrichtung durch einen Nutzer anhand der Ziffern der Kennzeichenfolge eingegebene Eingabefolge an den Server überträgt, und
- der Server die Eingabefolge anhand der Kennzeichenfolge in eine eingegebene Sicherheitskennung übersetzt und die eingegebene Sicherheitskennung gegen eine vorbekannte Sicherheitskennung verifiziert.

Ein solches System und ein solches Verfahren sind insbesondere für eine einfache, sichere Eingabe einer Sicherheitskennung für eine sehbehinderte Person geeignet. Das System und das Verfahren basieren auf dem Gedanken, an einem Gerät, also einem ersten Terminal oder einem zweiten Terminal, mittels einer taktilen oder akustischen Ausgabeeinrichtung eine Kennzeichenfolge mit einer vorbestimmten Anzahl von Ziffern taktil oder akustisch auszugeben, so dass ein Nutzer (der sehbehindert sein kann) auf taktile oder akustische Weise Kenntnis über die Kennzeichenfolge erhält. Anhand der so erkannten Kennzeichenfolge kann der Nutzer dann über die Tastenanordnung der Eingabeeinrichtung des anderen Geräts, also des zweiten Terminals oder des ersten Terminals, seine Sicherheitskennung eingeben, wobei die eingegebene Eingabefolge der betätigten Tasten an den Server übermittelt wird. Der Server, dem die Kennzeichenfolge bekannt ist, übersetzt die Eingabefolge in eine eingegebene Sicherheitskennung und verifiziert diese gegen eine vorbekannte Sicherheitskennung, um darüber den Nutzer zu authentifizieren.

Eine taktile Ausgabeeinrichtung kann beispielsweise durch eine Braille-Zeile verwirklicht sein, über die Ziffern in taktiler Weise mittels Brailleschrift ausgegeben werden können. Eine akustische Ausgabeeinrichtung kann beispielsweise durch einen Kopfhörer oder ein anderes akustisches Ausgabemittel verwirklicht sein.

Denkbar ist in einer konkreten Ausgestaltung, dass eine taktile oder akustische Ausgabeeinrichtung an dem ersten Terminal angeordnet ist und die Eingabe der Sicherheitskennung an einer Eingabeeinrichtung des zweiten Terminals erfolgt. Denkbar ist umgekehrt aber auch, dass das zweiten Terminal eine taktile oder akustische Ausgabeeinrichtung aufweist und die Eingabe über eine Eingabeeinrichtung des ersten Terminals erfolgt.

Die über die taktile oder akustische Ausgabeeinrichtung ausgegebene Kennzeichenfolge kann beispielsweise eine Permutation der Ziffern 0 bis 9 sein. Die Kennzeichenfolge gibt somit einem Nutzer vor, welche Taste er zu betätigen hat, wenn er eine bestimmte Ziffer eingeben will.

Denkbar und möglich ist aber auch, dass die Kennzeichenfolge eine Versatzinformation enthält und über die Versatzinformation die zur Eingabe einer bestimmten Ziffer zu betätigende Taste der Tastenanordnung vorgibt. Besteht die Sicherheitskennung beispielsweise aus vier Ziffern (wie bei PINs im Zusammenhang mit Bankkarten üblich), so kann die an der Ausgabeeinrichtung ausgegebene Kennzeichenfolge für jede Ziffer der Sicherheitskennung einen Versatz vorgeben, anhand dessen die zu betätigende Taste zur Eingabe der Ziffer zu bestimmen ist. Lautet die Sicherheitskennung beispielsweise "0 8 1 5", so kann die Versatzinformation beispielsweise "+3 +5 +8 +0" sein und entsprechend über die Ausgabeeinrichtung ausgegeben werden. Anhand der Versatzinformation berechnet sich nun, welche Tasten ein Nutzer zur Eingabe der Sicherheitskennung zu betätigen hat. So hat der Nutzer zur Eingabe seiner Sicherheitskennung die Versatzinformation zu seiner Sicherheitskennung hinzuzuaddieren. Die Bestimmung der einzugebenden Tasten erfolgt hierbei dadurch, dass der Nutzer im Kopf jeder Ziffer der Sicherheitskennung die entsprechende Ziffer der Versatzinformation hinzurechnet und, wenn die Summe größer als 9 ist, den Betrag 10 abzieht (Modulo 10). Im vorliegenden Beispiel sind somit die Tasten "3 3 9 5" zur Eingabe der Sicherheitskennung zu betätigen.

Der der Erfindung zugrunde liegende Gedanke soll nachfolgend anhand der in den Figuren dargestellten Ausführungsbeispiele näher erläutert werden. Es zeigen:
- Fig. 1: eine schematische Ansicht eines Systems zur sicheren Eingabe einer Sicherheitskennung;
- Fig. 2: eine schematische Ansicht eines ersten, feststehenden Terminals in Zusammenwirken mit einem zweiten Terminal in Form eines mobilen Endgeräts;
- Fig. 3A: eine Ansicht einer Kennzeichenfolge;
- Fig. 3B: eine Ansicht einer Tastenanordnung;
- Fig. 3C: eine Ansicht einer überlagerten Darstellung der Kennzeichenfolge mit der Tastenanordnung zur Eingabe einer Sicherheitskennung;
- Fig. 4: eine schematische Ansicht eines Systems mit einem Terminal und einem mobilen Endgerät in anderer Ausgestaltung zur sicheren Eingabe einer Sicherheitskennung;
- Fig. 5A: eine Ansicht einer Sicherheitskennung;
- Fig. 5B: eine Ansicht einer Versatzinformation zur Eingabe der Sicherheitskennung über eine Tastenanordnung einer Eingabeeinrichtung; und
- Fig. 5C: eine schematische Ansicht einer Tastenanordnung zur Eingabe einer Eingabefolge.

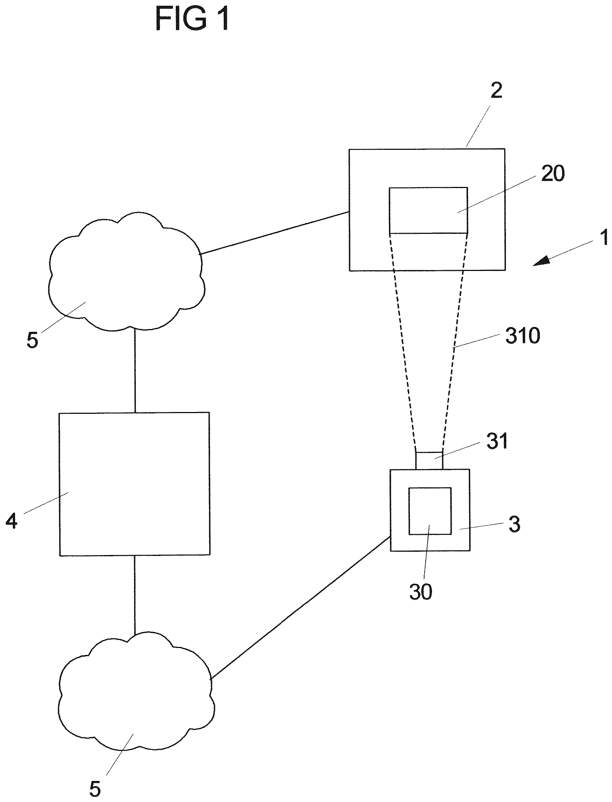

Fig. 1 zeigt in einer schematischen Ansicht einen grundsätzlichen Aufbau eines Systems 1, wie es vorliegend zur Eingabe einer Sicherheitskennung Verwendung findet. Das System 1 umfasst einen Server 4, der über ein Kommunikationsnetzwerk 5, beispielsweise das Internet, ein Mobilfunknetzwerk (2G, 3G, LTE oder dergleichen) oder ein anderes Netzwerk, einerseits mit einem ersten feststehenden Terminal 2, auch als Selbstbedienungsterminal bezeichnet, und andererseits mit einem zweiten Terminals in Form eines mobilen Endgeräts 3, beispielsweise einem Smartphone, einem Laptop-Computer, einem Tablet-Computer oder einem sonstigen internetfähigen mobilen Gerät, verbunden ist. Der Server 4 dient hierbei zur Steuerung eines Eingabevorgangs und zur Verifikation einer eingegebenen Sicherheitskennung mit einer vorbekannten Sicherheitskennung eines Nutzers.

An dieser Stelle sei angemerkt, dass der Server 4 nicht notwendigerweise aus einer Einheit besteht, sondern gegebenenfalls auch durch ein Serversystem mit mehreren verteilt aufgestellten, mit dem Kommunikationsnetzwerk 5 verbundenen Einheiten ausgestaltet sein kann. Wesentlich ist hierbei nur, dass der Server 4 mit dem Terminal 2 einerseits und dem mobilen Endgerät 3 andererseits in Kommunikationsverbindung steht und dazu ausgestaltet ist, einen Eingabevorgang zu steuern und eine eingegebene Sicherheitskennung gegenüber einer vorbekannten Sicherheitskennung zu verifizieren, um auf diese Weise einen Nutzer zu authentifizieren.

Ein Authentifizierungsvorgang kann beispielsweise wie folgt ablaufen.

In einem ersten Schritt schiebt ein Nutzer beispielsweise seine Bankkarte in einen Schlitz eines Kartenlesegeräts des beispielsweise als Geldautomat ausgebildeten Terminals 2 ein oder bringt eine Karte, die zur Nahfeldkommunikation (NFC: Near Field Communication) ausgestaltet ist, in die Nähe eines NFC-Lesegeräts des Terminals 2. Hierauf sendet das Terminal 2 eine über die Karte des Nutzers bezogene Nutzer-ID, beispielsweise inklusive der sogenannten PAN (Primary Account Number) des Nutzers, an den Server 4.

In einem nächsten Schritt wird festgestellt, ob sich das mobile Endgerät 3 des Nutzers tatsächlich in unmittelbarer Nähe des betreffenden Terminals 2 befindet. Hierzu generiert der Server 4 einen zufälligen mehrstelligen Zahlencode und überträgt diesen Code an das Terminal 2. Das Terminal 2 generiert einen zum Zahlencode passenden Barcode und zeigt diesen Barcode über eine Ausgabeeinrichtung 20 in Form eines Bildschirms an. Der Nutzer hält sein mobiles Endgerät 3 nun so, dass eine auf dem mobilen Endgerät 3 installierte Bank-Applikation (auch als "mobile banking app" bezeichnet) mittels einer Aufnahmeeinrichtung 31 in Form einer Kamera des mobilen Endgeräts 3 den Barcode lesen kann. Der Barcode wird in dem mobilen Endgerät 3 wiederum in einen Zahlencode umgewandelt und wird vom mobilen Endgerät 3 an den Server 4 übermittelt. Der Server 4 vergleicht den vom mobilen Endgerät 3 empfangenen Zahlencode mit dem an das Terminal 2 gesendeten Zahlencode. Stimmen beide überein, so ist verifiziert worden, dass sich der Nutzer tatsächlich mit seinem mobilen Endgerät 3 an dem Terminal 2 befindet. Die Transaktion kann damit fortgesetzt werden.

(An dieser Stelle sei angemerkt, dass dieses Vorgehen nur beispielhaft zu verstehen ist und nicht notwendigerweise so durchgeführt werden muss. Der gerade beschriebene Schritt kann beispielsweise gegebenenfalls auch entfallen, insbesondere dann, wenn eine Verifikation des mobilen Endgeräts 3 auch über einen in dem mobilen Endgerät 3 enthaltenen NFC-Chip vorgenommen werden kann. Zudem ist auch die Verwendung eines Barcodes in diesem Zusammenhang nicht zwingend erforderlich; beispielsweise kann stattdessen an dem Terminal 2 eine zufällig generierte Grafik angezeigt werden, die das mobile Endgerät 3 aufnimmt.)

In einem weiteren Schritt kann üblicherweise vorgesehen sein, dass die Bank-Applikation des mobilen Endgeräts 3 die Identität des Servers 4 mittels zum Beispiel eines sogenannten SSL-Zertifikats feststellt. Alternativ ist auch möglich, dass die Bank-Applikation einen zufälligen Zahlencode generiert und diesen an den Server 4 übermittelt. Der Server 4 übermittelt diesen Code an das Terminal 2, das wiederum den Zahlencode als Barcode an seiner Ausgabeeinrichtung 20 anzeigt. Die Bank-Applikation liest über die Aufnahmeeinrichtung 31 in Form der Kamera des mobilen Endgeräts 3 diesen Barcode ein und wandelt ihn um in einen Zahlencode. Ist der so empfangene Zahlencode gleich dem generierten Zahlencode, so ist die Identität des Servers 4 bestätigt.

In der Bank-Applikation wählt der Nutzer auf dem mobilen Endgerät 3 beispielsweise die Transaktion "Auszahlung" aus und gibt einen Betrag ein, den er ausgezahlt erhalten möchte.

Nunmehr erfolgt die sichere Eingabe einer Sicherheitskennung, der sogenannten PIN (Personal Identification Number), wie nachfolgend im Einzelnen erläutert werden soll. Ist die Verifikation der Sicherheitskennung durch den Server 4 erfolgreich, so wird das Terminal 2 vom Server angewiesen, den entsprechenden Betrag zu vereinzeln und auszuzahlen. Der Nutzer entnimmt schließlich das Geld. Die Transaktion ist damit abgeschlossen.

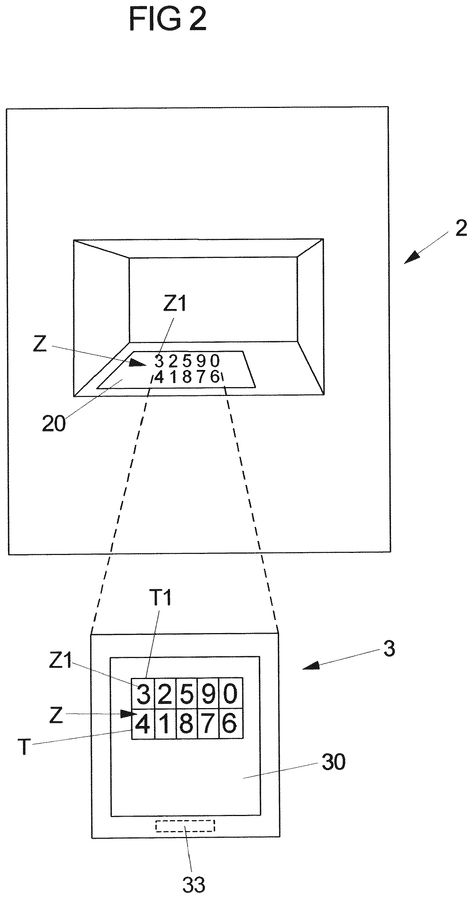

Die vorliegende Erfindung setzt insbesondere bei dem Schritt der Eingabe und der Verifikation der Sicherheitskennung an. Bei dem hier vorgestellten System 1 erfolgt die Eingabe der Sicherheitskennung dadurch, dass auf der Ausgabeeinrichtung 20 in Form des Bildschirms des Terminals 2 eine Kennzeichenfolge Z angezeigt wird, wie dies in Fig. 2 schematisch dargestellt ist. Diese Kennzeichenfolge Z wird über die Aufnahmeeinrichtung 31 in Form der Kamera des mobilen Endgerätes 3 aufgenommen und in Echtzeit, also ohne wesentliche zeitliche Verzögerung, auf einer Eingabeeinrichtung 30 in Form eines berührungssensitiven Bildschirms des mobilen Endgerätes 3 angezeigt. Auf der Eingabeeinrichtung 30 in Form des berührungssensitiven Bildschirms wird hierbei auch eine Tastenanordnung T dargestellt, die einzelne Tasten T1 in Form von Kästchen aufweist, die von einem Nutzer zur Eingabe seiner Sicherheitskennung betätigt werden können. Die Darstellung auf der Eingabeeinrichtung 30 der Kennzeichenfolge Z einerseits und der Tastenanordnung T andererseits erfolgt hierbei in überlagerter Weise derart, dass jeder Ziffer Z1 der Kennzeichenfolge Z eine Taste T1 der Tastenanordnung T zugeordnet ist, wie dies in Fig. 2 an der Eingabeeinrichtung 30 dargestellt ist. Anhand der in den Tasten T1 der Tastenanordnung T erscheinenden Ziffern Z1 der Kennzeichenfolge Z kann ein Nutzer nunmehr seine Sicherheitskennung an dem mobilen Endgerät 3 eingeben.

Die Kennzeichenfolge Z entspricht einer Permutation der Ziffern 0 bis 9, also einer Darstellung der Ziffern 0 bis 9 in einer zufälligen Reihenfolge. Diese Kennzeichenfolge Z wird vom Server 4 generiert und an das Terminal 2 zur Darstellung an der Ausgabeeinrichtung 20 übertragen. Die Kennzeichenfolge Z ist somit dem Server 4 und dem Terminal 2 bekannt.

Das mobile Endgerät 3 hingegen erhält keine Kenntnis über die Kennzeichenfolge Z. Denn das mobile Endgerät 3 nimmt die Kennzeichenfolge Z lediglich visuell auf, ohne Kenntnis darüber zu erlangen, in welcher Reihenfolge die Ziffern Z1 der Kennzeichenfolge Z angeordnet sind. Eine grafische Analyse der aufgenommenen Kennzeichenfolge Z findet an dem mobilen Endgerät 3 nicht statt.

Ein Nutzer kann, wenn die Kennzeichenfolge Z in überlagerter Weise mit der Tastenanordnung T an dem mobilen Endgerät 3 dargestellt ist, wie dies in Fig. 2 gezeigt ist, über die Tastenanordnung T seine ihm bekannte Sicherheitskennung an dem mobilen Endgerät 3 eingeben. Das mobile Endgerät 3 übermittelt jedoch nicht die Ziffern der Sicherheitskennung an den Server 4, sondern Informationen über die Tasten T1, die der Nutzer betätigt hat.

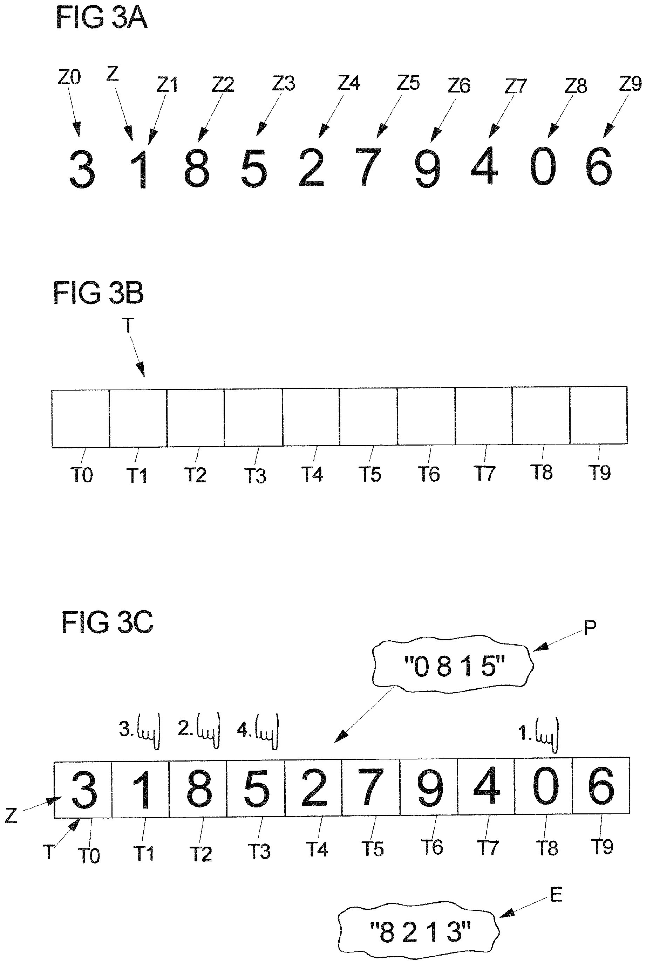

Dies ist in Fig. 3A bis 3C veranschaulicht. Beispielsweise übermittelt der Server 4 an das Terminal 2 eine Kennzeichenfolge Z mit Ziffern Z0 bis Z9, in der die Ziffern 0 bis 9 in der Permutation "3 1 8 5 2 7 9 4 0 6" enthalten sind (siehe Fig. 3A). Auf der Eingabeeinrichtung 30 des mobilen Endgeräts 3 wird eine Tastenanordnung T mit Tasten T0 bis T9 dargestellt (Fig. 3B). Wird über die Aufnahmeeinrichtung 31 in Form der Kamera des mobilen Endgeräts 3 die Kennzeichenfolge Z aufgenommen und in überlagerter Weise mit der Tastenanordnung T dargestellt, kann ein Nutzer über die Tastenanordnung T seine Sicherheitskennung eingeben (Fig. 3C).

Lautet die Sicherheitskennung P des Nutzers beispielsweise "0 8 1 5", so betätigt der Nutzer zur Eingabe seiner Sicherheitskennung P zunächst die Taste T8, um die "0" einzugeben, sodann die Tasten T2 ("8"), T1 ("1") und T3 ("5"). Die Bank- Applikation des mobilen Endgeräts 3 nimmt hierbei lediglich auf, welche Tasten TO-T9 betätigt worden sind und übersendet diese Information als Eingabefolge E an den Server 4. Die Eingabefolge E enthält die Bezeichnung der Tasten T8, T2, T1, T3, die der Benutzer zur Eingabe seiner Sicherheitskennung P betätigt hat, nicht aber die diesen Tasten T8, T2, T1, T3 zugeordneten Ziffern "0 8 1 5".

Das mobile Endgerät 3 hat somit keine Kenntnis über die Sicherheitskennung P, sondern nimmt lediglich auf, welche Tasten TO-T9 ein Nutzer betätigt. Der Server 4, dem die Kennzeichenfolge Z bekannt ist, übersetzt anhand der Kennzeichenfolge Z die Eingabefolge E in eine eingegebene Sicherheitskennung P und vergleicht diese mit der ihm bekannten Sicherheitskennung P. Ist der Vergleich erfolgreich, ist der Nutzer authentifiziert, so dass die Transaktion ausgeführt werden kann.

Grundsätzlich ist ausreichend, wenn der Server 4 für die Authentifizierung eine Kennzeichenfolge Z an das Terminal 2 übersendet, die vom mobilen Endgerät 3 aufgenommen wird, so dass der Nutzer anhand der Kennzeichenfolge Z seine Sicherheitskennung in die Eingabeeinrichtung 30 des mobilen Endgeräts 3 eingeben kann.

Um die Sicherheit weiter zu erhöhen, ist jedoch auch möglich, dass der Server 4 nach jeder Tastenbetätigung eine andere Kennzeichenfolge Z in Form einer Permutation der Ziffern 0 bis 9 an das Terminal 2 überträgt, so dass jede Ziffer der Sicherheitskennung P anhand einer anderen Kennzeichenfolge Z einzugeben ist.

In diesem Fall überträgt der Server 4 zunächst eine Kennzeichenfolge Z an das Terminal 2. Das mobile Endgerät 3 nimmt über seine Aufnahmeeinrichtung 31 die Kennzeichenfolge Z auf und stellt diese in überlagerter Weise mit der Tastenordnung T auf der Eingabeeinrichtung 30 dar. Ein Nutzer betätigt eine Taste TO-T9 der Tastenanordnung T, worauf eine Information über die betätigte Taste an den Server 4 übermittelt wird, der daraufhin eine neue, andere Kennzeichenfolge Z an das Terminal 2 übermittelt, die wiederum vom mobilen Endgerät 3 aufgenommen und in überlagerter Weise mit der Tastenanordnung T auf der Eingabeeinrichtung 30 dargestellt wird.

Die Tastenanordnung T auf der Eingabeeinrichtung 30 stellt vorliegend, gesteuert durch eine Steuereinrichtung 33, lediglich eine Anordnung von Platzhaltern dar, in denen die vom Terminal 2 aufgenommenen Ziffern Z0-Z9 der Kennzeichenfolge Z angezeigt werden. Dadurch, dass die Darstellung der Kennzeichenfolge Z und der Tastenanordnung T in überlagerter Weise erfolgt, wird die Eingabe für einen Nutzer einfach und intuitiv.

Um dem Nutzer hierbei nach Möglichkeit die Aufnahme der Kennzeichenfolge Z mittels der Aufnahmeeinrichtung 31 des mobilen Endgeräts 3 zu erleichtern, kann die Steuereinrichtung 33 des mobilen Endgeräts 3 ausgebildet sein, bei Aufnahme der Kennzeichenfolge Z ein Hinweissignal zu erzeugen, dass einem Nutzer anzeigt, wann die Kennzeichenfolge Z so aufgenommen wird, dass sie in korrekt überlagerter Weise mit der Tastenanordnung T der Eingabeeinrichtung 30 dargestellt werden kann.

Beispielsweise kann auf der Eingabeeinrichtung 30 um die Tastenanordnung T herum ein Rahmen erscheinen, der bei korrekt überlagerter Darstellung der Kennzeichenfolge Z mit der Tastenanordnung T seine Farbe beispielsweise von rot nach grün wechselt, so dass der Nutzer ein Feedback erhält, das ihm die korrekte Aufnahme der Kennzeichenfolge Z anzeigt.

Denkbar ist zudem, dass dem Nutzer auch Hinweise gegeben werden, wie er die Ausrichtung der Aufnahmeeinrichtung 31 des mobilen Endgeräts 3 relativ zur Ausgabeeinrichtung 20 des Terminals 2 zu verändern hat, um eine korrekte Aufnahme der Kennzeichenfolge Z zu erreichen. Solche Hinweissignale können grafisch oder akustisch oder auch auf andere Weise, zum Beispiel taktil mittels Vibrieren oder dergleichen, erfolgen.

Anzumerken ist an dieser Stelle, dass die Aufnahmeeinrichtung 31 des mobilen Endgeräts 3 nicht notwendigerweise durch eine Kamera ausgebildet sein muss. Ist das mobile Endgerät 3 beispielsweise durch eine brillenähnliche Vorrichtung mit Internetfähigkeit ausgestaltet (heutzutage erhältlich unter dem Markennamen "Google Glass"), so kann die Aufnahmeeinrichtung 31 auch einfach über ein Brillenglas ausgebildet sein, über das ein Nutzer auf die Ausgabeeinrichtung 20 des Terminals 2 blickt.

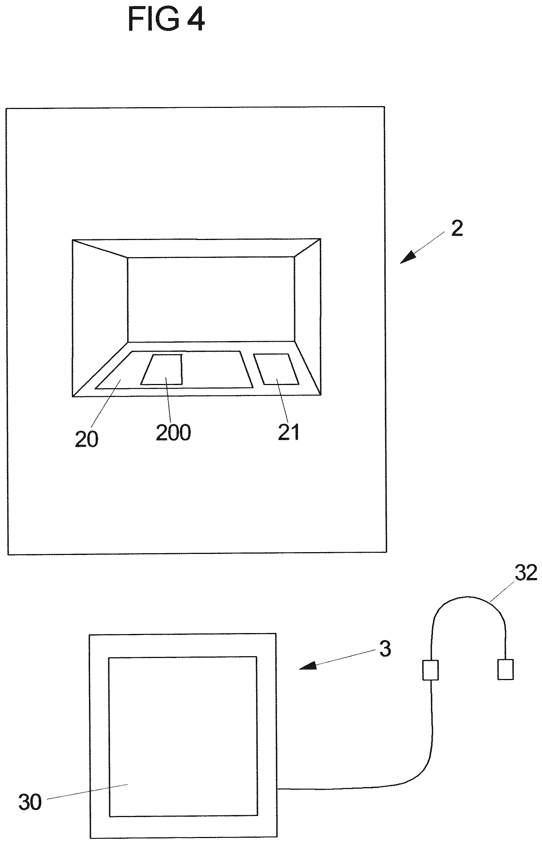

In anderer Ausgestaltung, die insbesondere zur sicheren Eingabe einer Sicherheitskennung für Sehbehinderte geeignet ist, kann die Ausgabe der Kennzeichenfolge Z auch anders erfolgen. So kann, wie in Fig. 4 dargestellt, an dem Terminal 2 eine Ausgabeeinrichtung 21 in Form einer Braille-Ausgabe zum Ausgeben der Kennzeichenfolge Z in Brailleschrift vorhanden sein. In diesem Fall nimmt ein (sehbehinderter) Nutzer die Kennzeichenfolge Z über die Braille-Ausgabeeinrichtung 21 in taktiler Weise, also durch Berühren, auf und erhält auf diese Weise Kenntnis darüber, in welcher Weise die Ziffern Z0-Z9) der Kennzeichenfolge Z permutiert sind. Nunmehr kann er seine Sicherheitskennung über Tasten der Eingabeeinrichtung 30 seines mobilen Endgeräts 3 anhand der ertasteten Kennzeichenfolge Z eingeben, wobei die Eingabe beispielsweise dann besonders sicher ist, wenn der Nutzer sein mobiles Endgerät 3 in der Hosentasche oder sonst wo versteckt hält und somit die Tasteneingabe von außen für einen Dritten nicht sichtbar ist. Das mobile Endgerät 3 übermittelt Informationen über die eingegebenen Tasten an den Server 4, der anhand der ihm bekannten Kennzeichenfolge Z die an den Tasten eingegebene Eingabefolge in einer eingegebenen Sicherheitskennung übersetzt und diese mit der ihm vorbekannten Sicherheitskennung des Nutzers vergleicht, um auf diese Weise den Nutzer zu authentifizieren.

Bei diesem Vorgehen können grundsätzlich die Rollen des Terminals 2 und des mobilen Endgeräts 3 auch vertauscht sein. So kann der Nutzer die Kennzeichenfolge Z auch an dem mobilen Endgerät 3 ertasten und seine Sicherheitskennung sodann über ein Tastenfeld 200 des Terminals 2 eingeben. In diesem Fall übersendet der Server 4 die Kennzeichenfolge Z an das mobile Endgerät 3 und erhält vom Terminal 2 Informationen über die betätigten Tasten. Der Server 4 übersetzt die in diesem Fall an dem Terminal 2 eingegebene Eingabefolge in eine eingegebene Sicherheitskennung und vergleicht diese mit der ihm vorbekannten Sicherheitskennung des Nutzers, um diesen zu authentifizieren.

Die Ausgabeeinrichtung ist zum Erleichtern der Eingabe der Sicherheitskennung für einen sehbehinderten Nutzer nicht notwendigerweise taktil ausgebildet, sondern kann beispielsweise auch eine akustische Ausgabe über einen Kopfhörer 32 bereitstellen. Gibt das Terminal 2 die Kennzeichenfolge Z aus, so ist der Kopfhörer 32 an das Terminal 2 angeschlossen. Gibt hingegen das mobile Endgerät 3 die Kennzeichenfolge Z aus, so ist der Kopfhörer 32 an das mobile Endgerät 3 angeschlossen.

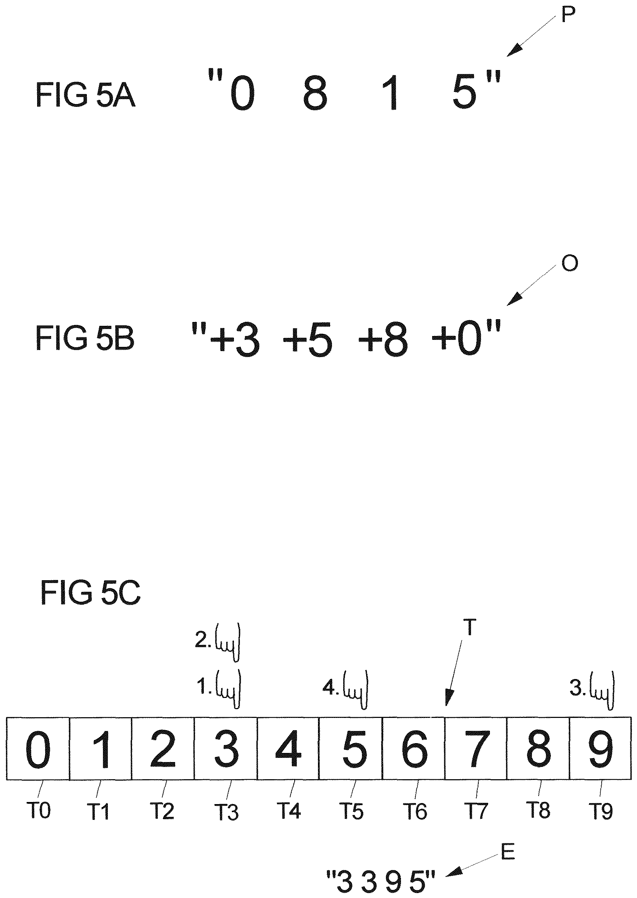

Die ausgegebene Kennzeichenfolge Z entspricht nicht notwendigerweise einer Permutation der Ziffern 0 bis 9, sondern kann beispielsweise auch eine Versatzinformation enthalten. Dies ist in Fig. 5A bis 5C veranschaulicht.

So kann die Sicherheitskennung P des Nutzers beispielsweise lauten "0 8 1 5" (Fig. 5A). Der Server 4 kann beispielsweise an das Terminal 2 eine Versatzinformation 0 zur Ausgabe über die Ausgabeeinrichtung 21 übersenden, wobei die Versatzinformation 0 beispielsweise lauten kann "+3 +5 +8 +0" (Fig. 5B). Durch Ausgabe an der Ausgabeeinrichtung 21, 32 wird dem Nutzer diese Versatzinformation 0 mitgeteilt, der sodann aus seiner Sicherheitskennung P und der Versatzinformation 0 eine einzugebende Eingabefolge E errechnet, wobei ein Übertrag gestrichen wird (Modulo 10; der Betrag 10 wird subtrahiert, wenn die Summe einer Ziffer der Sicherheitskennung P und der zugeordneten Versatzinformation 0 den Wert 9 überschreitet).

Die einzugebende Eingabefolge E wird berechnet, indem die Versatzinformation 0 ziffernweise den Ziffern der Sicherheitskennung P hinzuaddiert wird. Es ergibt sich die Eingabefolge E "3 3 9 5", so dass der Nutzer an der Tastenanordnung T der Eingabeeinrichtung 30 zunächst zweimal die Taste T3, sodann die Taste T9 und anschließend die Taste T5 zu betätigen hat (Fig. 5C). Das mobile Endgerät 3 übermittelt an den Server 4 die eingegebene Eingabefolge E "3 3 9 5", die der Server 4 in die eingegebene Sicherheitskennung P "0 8 1 5" übersetzt und mit der ihm vorbekannten Sicherheitskennung P zur Authentifizierung des Nutzers vergleicht.

Dadurch, dass das mobile Endgerät 3 selbst keinerlei Kenntnis über die Kennzeichenfolge Z bzw. die Versatzinformation O erhält, kennt das mobile Endgerät 3 auch die Sicherheitskennung P nicht. Verliert der Nutzer das mobile Endgerät 3, stellt dies somit kein Risiko dafür dar, dass ein Dritter, der das mobile Endgerät an sich nimmt, Kenntnis über die Sicherheitskennung P erhält.

Der der Erfindung zugrunde liegende Gedanke ist nicht auf die vorangehend geschilderten Ausführungsbeispiele beschränkt, sondern lässt sich grundsätzlich in gänzlich anders gearteter Weise verwirklichen.

Insbesondere kann die räumliche Anordnung der Tasten der Tastenanordnung sowie auch die räumliche Anordnung der Ziffern in grundsätzlich beliebiger Weise erfolgen, beispielsweise in einer Weise, wie dies heutzutage von Tastenfeldern beispielsweise an Geldautomaten oder an mobilen Telefonen bekannt ist. Die Anzahl der Tasten der Tastenanordnung muss hierbei nicht notwendigerweise der Anzahl der Ziffern der Kennzeichenfolge entsprechen, solange gewährleistet ist, dass jeder Ziffer eine Taste zugeordnet werden kann. So ist beispielsweise denkbar, dass mehr Tasten als Ziffern vorhanden sind.

Grundsätzlich kann die Kennzeichenfolge auch Buchstaben enthalten. Die einzugebende Sicherheitskennung entspricht in diesem Fall einem Passwort.

Das erste Terminal ist beispielsweise ein feststehendes, stationäres Terminal nach Art eines Selbstbedienungsterminals. Denkbar und möglich ist aber auch, dass das erste Terminal mobil, beispielsweise als mobiles Endgerät in Form eines Smartphones, eines Tablet-Computers oder dergleichen, ausgebildet ist.

### Bezugszeichenliste

- 1: System
- 2: Terminal (Selbstbedienungsgerät)
- 20: Ausgabeeinrichtung
- 200: Tastenfeld
- 21: Braille-Ausgabeeinrichtung
- 3: Mobiles Endgerät
- 30: Eingabeeinrichtung
- 31: Aufnahmeeinrichtung
- 32: Ausgabeeinrichtung
- 33: Steuereinrichtung
- 4: Server
- 5: Kommunikationsnetzwerk
- E: Eingabefolge
- O: Versatzinformation
- P: Sicherheitskennung
- T: Tastenanordnung
- T0-T9: Taste
- Z: Kennzeichenfolge
- Z0-Z9: Ziffer

## Patentansprüche

1. System (1) zur sicheren Eingabe einer Sicherheitskennung (P), mit
- einem ersten Terminal (2) zur Vornahme einer Geldtransaktion, das eine visuelle Ausgabeeinrichtung (20) aufweist und ausgebildet ist, über die Ausgabeeinrichtung (20) eine Kennzeichenfolge (Z) mit einer vorbestimmten Anzahl von Ziffern (Z1) visuell auszugeben,
- einem zweiten Terminal (3), das eine Steuereinrichtung (33), eine Eingabeeinrichtung (30) und eine Aufnahmeeinrichtung (31) aufweist, wobei die Eingabeeinrichtung (30) eine Tastenanordnung (T) mit einer vorbestimmten Anzahl von Tasten (T1) aufweist, und
- einem Server (4), der mit dem ersten Terminal (2) und dem zweiten Terminal (3) in Kommunikationsverbindung steht,
**dadurch gekennzeichnet,**
**dass**
- die Aufnahmeeinrichtung (31) des zweiten Terminals (3) ausgebildet ist, die über die Ausgabeeinrichtung (20) des ersten Terminals (2) ausgegebene Kennzeichenfolge (Z) visuell aufzunehmen,
- die Steuereinrichtung (33) des zweiten Terminals (3) ausgebildet ist, die aufgenommene Kennzeichenfolge (Z) derart der Tastenanordnung (T) der Eingabeeinrichtung (30) zuzuordnen, dass jede Ziffer (Z1) der Kennzeichenfolge (Z) einer Taste (T1) der Tastenanordnung (T) zugeordnet ist,
- das zweite Terminal (3) ausgebildet ist, eine über die Tastenanordnung (T) der Eingabeeinrichtung (30) anhand der Ziffern (Z1) der Kennzeichenfolge (Z) eingegebene Eingabefolge (E) an den Server (4) zu übertragen, und
- der Server (4) ausgebildet ist, die Eingabefolge (E) anhand der Kennzeichenfolge (Z) in eine eingegebene Sicherheitskennung zu übersetzen und die eingegebene Sicherheitskennung gegen eine vorbekannte Sicherheitskennung (P) zu verifizieren,
wobei die Eingabeeinrichtung (3) ausgebildet ist, die aufgenommene Kennzeichenfolge (Z) und die Tastenanordnung (T) überlagert darzustellen, und die Steuereinrichtung (33) ausgebildet ist, ein Hinweissignal zu erzeugen, um einem Nutzer eine bestimmungsgemäße Aufnahme der Kennzeichenfolge (Z) zur überlagerten Darstellung mit der Tastenanordnung (T) anzuzeigen.

2. System (1) nach Anspruch 1, **dadurch gekennzeichnet, dass** die Kennzeichenfolge (Z) eine Permutation der Ziffern 0-9 ist.

3. System (1) nach Anspruch 1 oder 2, **dadurch gekennzeichnet, dass** die Steuereinrichtung (33) ausgebildet ist, die Ziffern (Z1) der Kennzeichenfolge (Z) den Tasten (T1) der Tastenanordnung (T) anhand der Anordnung der Ziffern (Z1) zuzuordnen.

4. System (1) nach einem der Ansprüche 1 bis 3, **dadurch gekennzeichnet, dass** die Eingabeeinrichtung (30) des mobilen Endgeräts (3) durch einen berührungssensitiven Bildschirm ausgebildet ist.

5. System (1) nach Anspruch 4, **dadurch gekennzeichnet, dass** der berührungssensitive Bildschirm ausgebildet ist, die Tastenanordnung (T) anzuzeigen.

6. System (1) nach einem der vorangehenden Ansprüche, **dadurch gekennzeichnet, dass** die Aufnahmeeinrichtung (31) des mobilen Endegeräts (3) durch eine Kameraeinrichtung ausgebildet ist.

7. Verfahren zur sicheren Eingabe einer Sicherheitskennung (P), bei dem
- ein erstes Terminal (2) zur Vornahme einer Geldtransaktion über eine Ausgabeeinrichtung (20) eine Kennzeichenfolge (Z) mit einer vorbestimmten Anzahl von Ziffern (Z1) visuell ausgibt,
- ein zweites Terminal (3) eine Steuereinrichtung (33), eine Eingabeeinrichtung (30) und eine Aufnahmeeinrichtung (31) aufweist, wobei die Eingabeeinrichtung (30) eine Tastenanordnung (T) mit einer vorbestimmten Anzahl von Tasten (T1) aufweist, und
- ein Server (4) mit dem ersten Terminal (2) und dem zweiten Terminal (3) in Kommunikationsverbindung steht,
**dadurch gekennzeichnet,**
**dass**
- die Aufnahmeeinrichtung (31) des zweiten Terminals (3) die über die Ausgabeeinrichtung (20) des ersten Terminals (2) ausgegebene Kennzeichenfolge (Z) visuell aufnimmt,
- die Steuereinrichtung (33) des zweiten Terminals (3) die aufgenommene Kennzeichenfolge (Z) derart der Tastenanordnung (T) der Eingabeeinrichtung (30) zuordnet, dass jede Ziffer (Z1) der Kennzeichenfolge (Z) einer Taste (T1) der Tastenanordnung (T) zugeordnet ist,
- das zweite Terminal (3) eine über die Tastenanordnung (T) der Eingabeeinrichtung (30) anhand der Ziffern (Z1) der Kennzeichenfolge (Z) eingegebene Eingabefolge (E) an den Server (4) überträgt und
- der Server (4) die Eingabefolge (E) anhand der Kennzeichenfolge (Z) in eine eingegebene Sicherheitskennung übersetzt und die eingegebene Sicherheitskennung gegen eine vorbekannte Sicherheitskennung (P) verifiziert,
wobei die Eingabeeinrichtung (3) die aufgenommene Kennzeichenfolge (Z) und die Tastenanordnung (T) überlagert darstellt und die Steuereinrichtung (33) ein Hinweissignal erzeugt, um einem Nutzer eine bestimmungsgemäße Aufnahme der Kennzeichenfolge (Z) zur überlagerten Darstellung mit der Tastenanordnung (T) anzuzeigen.

8. Verfahren nach Anspruch 7, **dadurch gekennzeichnet, dass** der Server (4) eine Kennzeichenfolge (Z) in Form einer Permutation der Ziffern 0-9 zum Ausgeben über die Ausgabeeinrichtung (20) an das erste Terminal (2) überträgt.

9. Verfahren nach Anspruch 7 oder 8, **dadurch gekennzeichnet, dass** der Server (4) nach jeder Betätigung einer Taste (T1) der Tastenanordnung (T) der Eingabeeinrichtung (30) des mobilen Endgeräts (3) durch einen Nutzer eine neue Kennzeichenfolge (Z) in Form einer Permutation der Ziffern 0-9 zum Ausgeben über die Ausgabeeinrichtung (20) an das erste Terminal (2) überträgt.

## Claims

1. System (1) for securely inputting a security identifier (P), having
- a first terminal (2) for carrying out a financial transaction, which terminal has a visual output device (20) and is designed to visually output an identification sequence (Z) having a predetermined number of digits (Z1) via the output device (20),
- a second terminal (3) which has a control device (33), an input device (30) and a recording device (31), the input device (30) having a key arrangement (T) having a predetermined number of keys (T1), and
- a server (4) which has a communication connection to the first terminal (2) and to the second terminal (3),
**characterized**
**in that**
- the recording device (31) of the second terminal (3) is designed to visually record the identification sequence (Z) output via the output device (20) of the first terminal (2),
- the control device (33) of the second terminal (3) is designed to assign the recorded identification sequence (Z) to the key arrangement (T) of the input device (30) in such a manner that each digit (Z1) of the identification sequence (Z) is assigned to a key (T1) of the key arrangement (T),
- the second terminal (3) is designed to transmit an input sequence (E) input via the key arrangement (T) of the input device (30) on the basis of the digits (Z1) of the identification sequence (Z) to the server (4), and
- the server (4) is designed to translate the input sequence (E) into an input security identifier on the basis of the identification sequence (Z) and to verify the input security identifier against a previously known security identifier (P),
the input device (3) being designed to display the recorded identification sequence (Z) and the key arrangement (T) in a superimposed manner, and the control device (33) being designed to generate a notification signal in order to indicate to a user that the identification sequence (Z) has been properly recorded for the superimposed display with the key arrangement (T).

2. System (1) according to Claim 1, **characterized in that** the identification sequence (Z) is a permutation of the digits 0-9.

3. System (1) according to Claim 1 or 2, **characterized in that** the control device (33) is designed to assign the digits (Z1) of the identification sequence (Z) to the keys (T1) of the key arrangement (T) on the basis of the arrangement of the digits (Z1).

4. System (1) according to one of Claims 1 to 3, **characterized in that** the input device (30) of the mobile terminal (3) is formed by a touch-sensitive screen.

5. System (1) according to Claim 4, **characterized in that** the touch-sensitive screen is designed to display the key arrangement (T).

6. System (1) according to one of the preceding claims, **characterized in that** the recording device (31) of the mobile terminal (3) is formed by a camera device.

7. Method for securely inputting a security identifier (P), in which
- a first terminal (2) for carrying out a financial transaction visually outputs an identification sequence (Z) having a predetermined number of digits (Z1) via an output device (20),
- a second terminal (3) has a control device (33), an input device (30) and a recording device (31), the input device (30) having a key arrangement (T) having a predetermined number of keys (T1), and
- a server (4) has a communication connection to the first terminal (2) and to the second terminal (3),
**characterized**
**in that**
- the recording device (31) of the second terminal (3) visually records the identification sequence (Z) output via the output device (20) of the first terminal (2),
- the control device (33) of the second terminal (3) assigns the recorded identification sequence (Z) to the key arrangement (T) of the input device (30) in such a manner that each digit (Z1) of the identification sequence (Z) is assigned to a key (T1) of the key arrangement (T),
- the second terminal (3) transmits an input sequence (E) input via the key arrangement (T) of the input device (30) on the basis of the digits (Z1) of the identification sequence (Z) to the server (4), and
- the server (4) translates the input sequence (E) into an input security identifier on the basis of the identification sequence (Z) and verifies the input security identifier against a previously known security identifier (P),
the input device (3) displaying the recorded identification sequence (Z) and the key arrangement (T) in a superimposed manner, and the control device (33) generating a notification signal in order to indicate to a user that the identification sequence (Z) has been properly recorded for the superimposed display with the key arrangement (T).

8. Method according to Claim 7, **characterized in that** the server (4) transmits an identification sequence (Z) in the form of a permutation of the digits 0-9 to the first terminal (2) for output via the output device (20).

9. Method according to Claim 7 or 8, **characterized in that**, after each actuation of a key (T1) of the key arrangement (T) of the input device (30) of the mobile terminal (3) by a user, the server (4) transmits a new identification sequence (Z) in the form of a permutation of the digits 0-9 to the first terminal (2) for output via the output device (20).

## Revendications

1. Système (1) pour la saisie sécurisée d'un identifiant de sécurité (P), comportant
- un premier terminal (2) destiné à effectuer une transaction financière qui comporte un dispositif de sortie visuelle (20) et est conçu pour fournir en sortie visuellement, par l'intermédiaire du dispositif de sortie (20), une séquence de numéros d'identification (Z) comportant un nombre prédéterminé de chiffres (Z1),
- un deuxième terminal (3) qui comporte un dispositif de commande (33), un dispositif d'entrée (30) et un dispositif d'acquisition (31), dans lequel le dispositif d'entrée (30) comporte un système de touches (T) ayant un nombre prédéterminé de touches (T1), et
- un serveur (4) qui est en liaison de communication avec le premier terminal (2) et le deuxième terminal (3),
**caractérisé en ce que**
- le dispositif d'acquisition (31) du deuxième terminal (3) est conçu pour acquérir la séquence de numéros d'identification fournis en sortie (Z) visuellement par l'intermédiaire du dispositif de sortie (20) du premier terminal (2),
- le dispositif de commande (33) du deuxième terminal (3) est conçu pour associer la séquence de numéros d'identification acquise (Z) au système de touches (T) du dispositif d'entrée (30) de manière à ce que chaque chiffre (Z1) de la séquence de numéros d'identification (Z) soit associé à une touche (T1) du système de touches (T),
- le deuxième terminal (3) est conçu pour transmettre au serveur (4) une séquence d'entrée saisie (E) par l'intermédiaire du système de touches (T) du dispositif d'entrée (30) sur la base des chiffres (Z1) de la séquence de numéros d'identification (Z), et
- le serveur (4) est conçu pour convertir la séquence d'entrée (E) en un identifiant de sécurité saisi sur la base de la séquence de numéros d'identification (Z) et pour vérifier l'identifiant de sécurité saisi par rapport à un identifiant de sécurité connu à l'avance (P),
dans lequel le dispositif d'entrée (3) est conçu pour représenter de manière superposée la séquence de numéros d'identification acquise (Z) et le système de touches (T), et le dispositif de commande (33) est conçu pour générer un signal d'indication afin de présenter à un utilisateur une acquisition conforme de la séquence de numéros d'identification (Z) aux fins de la représentation superposée avec le système de touches (T).

2. Système (1) selon la revendication 1, **caractérisé en ce que** la séquence de numéros d'identification (Z) est une permutation des chiffres 0-9.

3. Système (1) selon la revendication 1 ou 2, **caractérisé en ce que** le dispositif de commande (33) est conçu pour associer les chiffres (Z1) de la séquence de numéros d'identification (Z) aux touches (T1) du système de touches (T) sur la base de l'agencement des chiffres (Z1).

4. Système (1) selon l'une quelconque des revendications 1 à 3, **caractérisé en ce que** le dispositif d'entrée (30) du terminal mobile (3) est formé par un écran tactile.

5. Système (1) selon la revendication 4, **caractérisé en ce que** l'écran tactile est conçu pour afficher le système de touches (T).

6. Système (1) selon l'une quelconque des revendications précédentes, **caractérisé en ce que** le dispositif d'acquisition (31) du terminal mobile (3) est formé par un dispositif à caméra.

7. Procédé de saisie sécurisée d'un identifiant de sécurité (P), dans lequel
- un premier terminal (2) destiné à effectuer une transaction financière par l'intermédiaire d'un dispositif de sortie (20) fournit en sortie visuellement une séquence de numéros d'identification (Z) ayant un nombre prédéterminé de chiffres (Z1),
- un deuxième terminal (3) comporte un dispositif de commande (33), un dispositif d'entrée (30) et un dispositif d'acquisition (31), dans lequel le dispositif d'entrée (30) comporte un système de touches (T) ayant un nombre prédéterminé de touches (T1), et
- un serveur (4) est en liaison de communication avec le premier terminal (2) et le deuxième terminal (3),
**caractérisé en ce que**
- le dispositif d'acquisition (31) du deuxième terminal (3) acquiert visuellement la séquence de numéros d'identification fournis en sortie (Z) par l'intermédiaire du dispositif de sortie (20) du premier terminal (2),
- le dispositif de commande (33) du deuxième terminal (3) associe la séquence de numéros d'identification acquise (Z) au système de touches (T) du dispositif d'entrée (30) de manière à ce que chaque chiffre (Z1) de la séquence de numéros d'identification (Z) soit associé à une touche (T1) du système de touches (T),
- le deuxième terminal (3) transmet au serveur (4) une séquence d'entrée saisie (E) par l'intermédiaire du système de touches (T) du dispositif d'entrée (30) sur la base des chiffres (Z1) de la séquence de numéros d'identification (Z) et
- le serveur (4) convertit la séquence d'entrée (E) en un identifiant de sécurité saisi sur la base de la séquence de numéros d'identification (Z) et vérifie l'identifiant de sécurité saisi par rapport à un identifiant de sécurité connu à l'avance (P),
dans lequel le dispositif d'entrée (3) représente de manière superposée la séquence de numéros d'identification acquise (Z) et le système de touches (T) et le dispositif de commande (33) génère un signal d'indication afin de présenter à un utilisateur une acquisition conforme de la séquence de numéros d'identification (Z) aux fins de la représentation superposée avec le système de touches (T).

8. Procédé selon la revendication 7, **caractérisé en ce que** le serveur (4) transmet au premier terminal (2) une séquence de numéros d'identification (Z) sous la forme d'une permutation des chiffres 0-9 aux fins de la fourniture en sortie par l'intermédiaire du dispositif de sortie (20).

9. Procédé selon la revendication 7 ou 8, **caractérisé en ce que** le serveur (4), après chaque actionnement d'une touche (T1) du système de touches (T) du dispositif d'entrée (30) du terminal mobile (3) par un utilisateur, transmet au premier terminal (2) une nouvelle séquence de numéros d'identification (Z) sous la forme d'une permutation des chiffres 0-9 aux fins de la fourniture en sortie par l'intermédiaire du dispositif de sortie (20).
